# EUROPÄISCHE PATENTSCHRIFT

(11) **EP 4 087 775 B1**
(45) Veröffentlichungstag und Bekanntmachung des Hinweises auf die Patenterteilung: **15.11.2023**
(21) Anmeldenummer: 21700401.9
(22) Anmeldetag: 11.01.2021
(51) Int. Cl.: B62M 6/50, B62M 6/45

(54) **VERFAHREN UND VORRICHTUNG ZUR ANSTEUERUNG EINES ANTRIEBS EINES PEDALBETRIEBENEN FAHRZEUGS**
METHOD AND DEVICE FOR ACTUATING A DRIVE OF A PEDAL-OPERATED VEHICLE
PROCÉDÉ ET DISPOSITIF POUR ACTIONNER UN ENTRAÎNEMENT D'UN VÉHICULE À PÉDALE

(30) Priorität: 10.01.2020 DE 102020200227
(43) Veröffentlichungstag der Anmeldung: 16.11.2022
(73) Patentinhaber: Robert Bosch GmbH, 70442 Stuttgart (DE)
(72) Erfinder: MANEWALD, Merlin Martin, 72074 Tuebingen (DE); WEINMANN, Matthias, 72336 Balingen (DE); BAUMGAERTNER, Daniel, 72072 Tuebingen (DE)
(86) Internationale Anmeldenummer: PCT/EP2021/050325
(87) Internationale Veröffentlichungsnummer: WO 2021/140238

(56) Entgegenhaltungen:
- EP-A1- 2 840 017
- DE-A1-102014 115 716
- DE-A1-102015 015 496
- DE-A1-102017 213 952
- DE-A1-102018 218 178
- DE-A1-102019 106 422
- DE-A1-102019 106 586
- JP-A- 2018 024 416

## Beschreibung

Die Erfindung betrifft ein Verfahren und eine Vorrichtung zur Ansteuerung eines Hilfsantriebs eines ansonsten mittels Pedalen durch den Fahrer angetriebenen Fahrzeugs.

### Stand der Technik

Das Dokument DE 10 2018 218178 A1 offenbart die Merkmale der Präambel von Anspruch 1.

Die Unterstützung durch einen zumeist elektrisch betriebenen Antrieb eines Elektrofahrrads erfolgt üblicherweise in Abhängigkeit der Trittfrequenz oder des Tretdrehmoments des Fahrers. Dabei wird der Vortrieb durch den Antrieb entsprechend der Tretgeschwindigkeit oder der Tretkraft gesteuert. Aufgrund der kreisförmigen Bewegung der Tretkurbel sowie der meistens ungleichförmigen Tretbewegung des Fahrers wird so für die Ansteuerung eine um den zeitlichen Mittelwert schwankende Messgröße erfasst, auf deren Basis die Unterstützung durch den Antrieb gesteuert beziehungsweise geregelt wird. Besonders im Falle der Tretkraft verläuft die Messgröße Drehmoment in Form einer stark welligen Sinuskurve.

Würde die Unterstützung durch den Antrieb ohne Zeitverzögerung direkt in Abhängigkeit der so erfassten stark welligen Sinuskurve geregelt werden, würde sich ein gleichartig ungleichmäßiges unterstützendes Antriebs- oder Motordrehmoment ergeben, welches sich zusätzlich zum vom Fahrer erzeugten Vortrieb addieren würde. Das Resultat wäre eine teilweise ruckhafte Reaktion und Bewegung des Elektrofahrrads. Darüber hinaus ergeben sich bei einer derartigen direkten Ableitung des Antriebsdrehmoments bei Anstiegen weitere Nachteile. So kann beispielsweise bei Erreichen eines Totpunkts der Pedalstellung (ein Pedal ganz oben, das andere ganz unten) die Situation eintreten, dass am Kettenblatt und somit am antreibenden Hinterrad kein oder nur ein sehr geringes Drehmoment anliegt, wodurch die Geschwindigkeit abnimmt und den Fahrer gegebenenfalls zum Anhalten oder Absteigen zwingt.

Aus diesem Grund erfolgt die Ansteuerung und der Betrieb des Antriebs mittels einer Nachlauf-Zeitkonstanten in Abhängigkeit des erfassten (welligen) Fahrerdrehmoments auf der Pedale. Je nach gewählter Zeitkonstanten führt dieses Verfahren jedoch zu einer Trägheit des Systems, welche bei bestimmten Fahrsituationen nachteilig sein könnte. So kann es vorkommen, dass bei der Wahl einer zu langen Zeitkonstanten beispielsweise beim Anfahren oder bei einem dynamischen Antritt die gewünschte Unterstützung nur verzögert umgesetzt wird.

Mit der vorliegenden Erfindung soll daher eine Lösung vorgeschlagen werden, die Zeitkonstante und somit die Nachlaufzeit des Antriebs geeignet an die Fahrsituation anzupassen.

### Offenbarung der Erfindung

Gemäß den unabhängigen Ansprüchen wird ein Verfahren sowie eine Vorrichtung beansprucht, die zur Steuerung eines zusätzlichen elektrischen oder motorischen Antriebs eines wenigstens teilweise durch den Fahrer mittels eines Pedalantriebs antreibbaren Fahrzeuges vorgesehen ist. Dabei soll unter einem Fahrzeug jede Art von Fahrzeug verstanden werden, welches eine Tretkurbel aufweist, die vom Fahrer betätigt wird, wie beispielsweise ein Elektrofahrrad. Zur Ableitung der Steuerung des Antriebs ist dabei vorgesehen, dass wenigstens eine erste Drehbewegungsgröße erfasst wird, die die Drehbewegung der Pedale beziehungsweise die Tretbewegung der Tretkurbel durch den Fahrer repräsentiert, insbesondere deren zeitlichen Veränderung. Die erste Drehbewegungsgröße kann dabei mittels eines einzelnen Sensors oder einer Zusammenschau von Sensorgrößen mehrerer Sensoren erfasst werden. Der Antrieb wird nachfolgend in Abhängigkeit einer zweiten Drehbewegungsgröße gesteuert oder geregelt, die sich aus der ersten Drehbewegungsgröße ergibt. Zur Ableitung der zweiten Drehbewegungsgröße ist vorgesehen, dass zusätzlich zur ersten Drehbewegungsgröße, die die Tretbewegung des Fahrers repräsentiert, zumindest eine Zeitkonstante berücksichtigt wird, die einen Einfluss auf die Nachlaufzeit des angesteuerten beziehungsweise geregelten Antriebs hat. Der Kern der Erfindung liegt dabei darin, dass die aus der ersten Drehbewegungsgröße abgeleitete zweite Drehbewegungsgröße mit der ursprünglichen ersten Drehbewegungsgröße verglichen wird. Je nach Ergebnis dieses Vergleiches wird anschließend zur Berechnung oder Erzeugung der zweiten Drehbewegungsgröße die verwendete Zeitkonstante variiert.

Der Vorteil bei einem derartigen Vorgehen zur Ableitung der Ansteuerung beziehungsweise Regelung des Antriebs liegt darin, dass unterschiedliche Zeitkonstanten in Abhängigkeit des Ergebnisses der Ableitung für die zweite Drehbewegungsgröße verwendet werden können. So kann bei einer zu großen Differenz zwischen beiden Drehbewegungsgrößen die Zeitkonstante herauf oder herunter gesetzt werden, um die Reaktion des Antriebs auf den Vortrieb des Fahrzeugs zu beschleunigen oder zu verlangsamen. Dies ist besonders bei Anfahrsituationen oder Bergan- oder Abfahrten sinnvoll.

In einer Ausgestaltung der Erfindung ist vorgesehen, dass die zweite Drehbewegungsgröße mittels einer Tiefpass-Filterung oder -Glättung der ersten Drehbewegungsgröße erzeugt wird. Hierbei kann eine Tiefpass-Filterung der 1. Ordnung verwendet werden.

Die Variation der Zeitkonstante kann zwischen zwei insbesondere vorgegebenen Endwerten liegen und kontinuierlich veränderbar sein. Es ist jedoch alternativ auch möglich, dass feste Zeitkonstanten vorgegeben sind, so dass das Verfahren zwischen wenigstens zwei Zeitkonstanten wählen kann. Die Vorgabe der Zeitkonstanten kann auch in einer Datenbank abgespeichert sein, auf die das Verfahren zugreift. Die Auswahl der Zeitkonstanten kann alleine aufgrund des Vergleichs erfolgen oder in Verbindung mit zusätzlichen Kriterien erfolgen, z.B. der Berücksichtigung von weiteren Betriebsdaten oder fahrdynamischen Parametern.

Zur Ausführung der Erfindung kann vorgesehen sein, dass eine erste Zeitkonstante ausgewählt wird, wenn die erste Drehbewegungsgröße einen Schwellenwert übersteigt. Ansonsten wird eine zweite Zeitkonstante ausgewählt. Hierbei kann vorgesehen sein, dass die erste Zeitkonstante kleiner als die zweite Zeitkonstante ist, insbesondere um eine Größenordnung kleiner.

Der Schwellenwert kann dabei abhängig von der zweiten Drehbewegungsgröße gewählt werden. Im einfachsten Fall entspricht der Schwellenwert der zweiten Drehbewegungsgröße. Durch diese Wahl des Schwellenwerts kann erkannt werden, dass der Fahrer eine höhere Trittanforderung auf die Pedale ausübt als durch die Ableitung der Steuerung des Antriebs vorgesehen wäre.

Eine weitere Möglichkeit zur Festlegung des Schwellenwerts besteht darin, die zweite Drehbewegungsgröße mit einem Skalierungsfaktor zu skalieren oder der zweiten Drehbewegungsgröße einen festen oder variablen Wert hinzuzuaddieren. Bei der Skalierung kann beispielsweise erreicht werden, dass bei kleinen Trittanforderungen, d.h. kleinen ersten Drehbewegungsgrößen eine höhere Empfindlichkeit zur Änderung der Zeitkonstante und somit der Steuerung des Antriebs vorliegt während bei hohen Trittanforderung, d.h. hohen ersten Drehbewegungsgrößen eine größere Änderung der Trittanforderung notwendig ist, um eine Änderung der Ansteuerung zu erreichen. Ähnlich sieht es bei der Verwendung eines variablen Wertes aus, der zur Festlegung des Schwellenwerts zur zweiten Drehbewegungsgröße addiert wird. Bei der Verwendung eines absoluten oder festen Werts zur Addition zur zweiten Drehbewegungsgröße ist dagegen ein umgekehrter Effekt zu erwarten, da dieser feste Wert bei höheren zweiten Drehbewegungsgrößen in Relation weniger ins Gewicht fällt als bei niedrigeren zweiten Drehbewegungsgrößen.

Vorteilhafterweise lassen sich der Skalierfaktor oder der absolute beziehungsweise variable Wert in Abhängigkeit von Betriebsgrößen des Fahrzeugs oder von fahrdynamischen Sensorgrößen, insbesondere solche durch den Fahrer erzeugte oder beeinflussbare Sensorgrößen, vorgeben. Denkbar sind hierbei die Berücksichtigung der Geschwindigkeit oder der Beschleunigung des Fahrrads, der seitlichen Neigung, des Nickwinkels, der Gierrate aber auch der Masse des Fahrrads oder des Fahrers und/oder der Trittgeschwindigkeit oder Treittfrequenz.

Weiterhin ist denkbar, dass wenigstens zwei Schwellenwerte verwendet werden, bei denen jeweils unterschiedliche Skalierfaktoren oder absoluten beziehungsweise variable Wert die zugrunde liegende zweite Drehbewegungsgröße modifizieren. In diesem Fall würde für das Erreichen oder das Überschreiten jedes Schwellenwerts eine eigene Zeitkonstante auswählbar sein. Somit könnten beispielsweise dritte, vierte oder fünfte Zeitkonstanten vorgesehen sein, die jeweils unterschiedliche Nachlaufzeiten bei der Ansteuerung des Antriebs erzeugen. Alternativ oder zusätzlich kann vorgesehen sein, dass die verwendete Zeitkonstante in Abhängigkeit der ersten oder zweiten Drehbewegungsgröße festgelegt wird.

Zusätzlich kann vorgesehen sein, dass die Erzeugung der zweiten Drehbewegungsgröße, mittels der die Ansteuerung des Antriebs abgeleitet wird, eine weitere Betätigungsgröße der Pedale durch den Fahrer berücksichtigt. Selbstverständlich kann auch vorgesehen sein, dass die Berücksichtigung der Pedalbetätigung auch erst bei der Ableitung der Steuerung aus der zweiten Drehbewegungsgröße erfolgt.

Weiterhin ist denkbar, dass wenigstens eine der verwendeten Zeitkonstanten ebenfalls in Abhängigkeit von der Betätigungsgröße der Pedale variiert wird.

Die Betätigungsgröße kann dazu verwendet werden, die zweite Drehbewegungsgröße mit einem Offset zu beaufschlagen. Zusätzlich kann der Offset auch in Abhängigkeit der vorgegebenen Zeitkonstante gewählt werden.

Die erste Drehbewegungsgröße kann sowohl ein Drehmoment repräsentieren, welches der Fahrer auf die Pedale ausübt als auch die vom Fahrer erzeugte Trittfrequenz oder Kadenz. Entsprechend kann die Betätigungsgröße die jeweils andere vom Fahrer ausgeübte oder erzeugte physikalische Größe repräsentieren.

Weitere Vorteile ergeben sich aus der nachfolgenden Beschreibung von Ausführungsbeispielen bzw. aus den abhängigen Patentansprüchen.

### Kurze Beschreibung der Zeichnungen

Das Blockschaltbild in Figur 1 zeigt schematisch den Aufbau einer Vorrichtung, die das erfindungsgemäße Verfahren ausführt. In der Figur 2 ist schematisch dir Durchführung eines ersten Ausführungsbeispiels der Erfindung dargestellt. Die Figur 3 zeigt ein zweites Ausführungsbeispiel der Erfindung.

### Ausführungsformen der Erfindung

Wie eingangs bereits ausgeführt, erfolgt üblicherweise die Ansteuerung des zusätzlichen Antriebs eines pedalbetriebenen Fahrzeugs, z.B. eines Elektrofahrrads, in Abhängigkeit von der Betätigung der Pedale durch den Fahrer. Dabei kann sowohl die Trittfrequenz beziehungsweise die Tretgeschwindigkeit als auch die Kraft der Betätigung in Form des Fahrertretdrehmoments als Maß für die gewünschte Unterstützung durch den zusätzlichen Vortrieb des vorgesehenen Antriebs herangezogen werden.

Mit der vorliegenden Erfindung soll nun ein Verfahren sowie eine Vorrichtung beschrieben werden, die die Anpassung der Unterstützung durch den (Hilfs-) Antrieb 160 in Abhängigkeit vom Fahrerwunsch verbessert. Hierzu ist vorgesehen, dass ein Steuergerät 100 einer entsprechenden Vorrichtung, z.B. einer Mensch-Maschine-Schnittstelle (engl. Human-Machine-Interface - HMI), wie sie für die Steuerung des elektrischen Antriebs üblich ist, verschiedene Sensorgrößen erfasst und basierend auf diesen Sensorgrößen den Antrieb 160 ansteuert. Hierbei kann vorgesehen sein, dass das Steuergerät 100 einen Speicher 110 aufweist, in dem entsprechende Datenbanken oder Größen hinterlegt sind, die für die Steuerung relevant sind. Zur Durchführung der Ableitung der Ansteuerung erfasst das Steuergerät 100 den Fahrerwunsch beziehungsweise die Betätigung der Pedale durch den Fahrer. Dies kann mittels eines Drehmomentsensors 120 aber auch mittels eines Trittfrequenzsensors 130 an der Tretkurbel des Fahrrads erreicht werden. Darüber hinaus können weitere Sensoren 140 und/oder 150 am Fahrzeug, Fahrrad oder am Fahrer angebracht sein, die fahrdynamische Größen oder Betriebsgrößen erfassen. Hierbei sei u.a. auf Sensoren zur Erfassung der Geschwindigkeit, der Beschleunigung, der Gierrate, der seitlichen Neigung, der Fahrbahnsteigung aber auch der Herzfrequenz verwiesen. Darüber hinaus kann auch möglich sein, die Umgebung des Fahrzeugs beziehungsweise des Fahrrads zu erfassen, z.B. mittels Video-Sensorik oder Ultraschall, um beispielsweise andere Verkehrsteilnehmer oder Behinderungen auf dem Weg zu erfassen.

Ausgehend von den so erhaltenen Sensorgrößen über die Betätigung der Tretkurbel durch den Fahrer kann das Steuergerät den Antrieb derart ansteuern, dass ein zusätzlicher Vortrieb zu dem von Fahrer mittels seiner Tretkraft erzeugten Vortrieb erzeugt wird. Hierbei kann ein Unterstützungslevel, d.h. eine Verstärkung des Fahrerwunsches, vorgegeben sein oder vom Fahrer gewählt werden. Durch zusätzliche Informationen über die Fahrdynamik sowie die Betriebs- oder Umgebungsparameter kann zusätzlich eine Anpassung der Unterstützung vorgenommen werden.

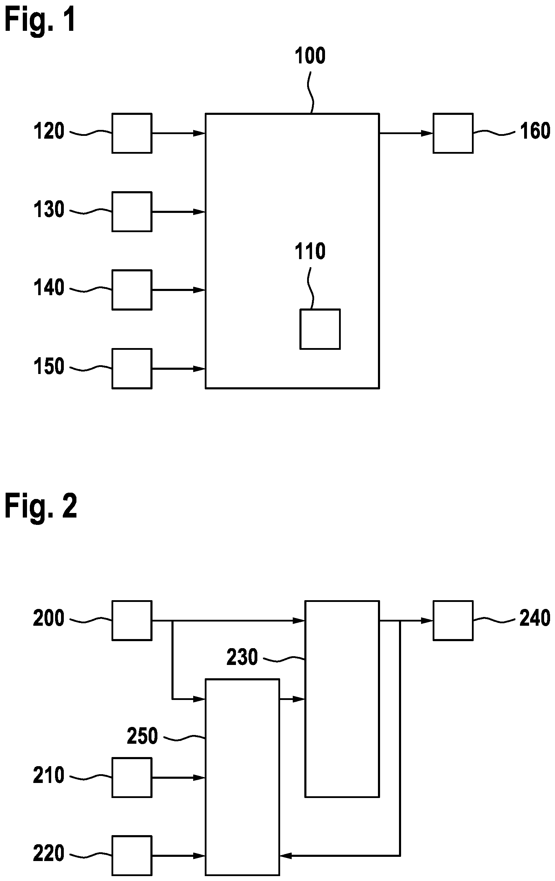

In einem ersten Ausführungsbeispiel gemäß der Figur 2 wird zunächst das vom Fahrer aufgebrachte beziehungsweise erzeugte Fahrerdrehmoment M_in in einem Schritt 200 oder einem Modul basierend auf den erfassten Sensorgrößen ermittelt. Typischerweise handelt es sich hierbei um eine erste Drehbewegungsgröße, die direkt oder indirekt mittels eines Drehmomentensensors 120 an der Tretkurbel des Fahrrads erfasst wird. Alternativ kann hier auch die Trittfrequenz verwendet werden, um daraus einen Wert für den aktuellen Fahrerwunsch abzuleiten. Die so ermittelte erste Drehbewegungsgröße wird einem Tiefpass 230 zugeführt, welcher mittels eines Zeitkonstante T eine zweite Drehbewegungsgröße M_out erzeugt und über eine Ausgabe 240 ausgibt. Diese zweite Drehbewegungsgröße wird dazu verwendet, die Steuerung des Antriebs 160 abzuleiten. Mit der vorliegenden Erfindung wird nun die Festlegung der Zeitkonstanten T beschrieben. Hierzu sind im einfachsten Fall zwei Zeitkonstanten T_up und T_down vorgesehen, die entsprechend über Schritte 210 und 220 eingelesen werden, beispielsweise aus dem Speicher 110. Zusammen mit der erfassten ersten Drehbewegungsgröße M_in und dem aus einer früheren Ermittlung stammenden zweiten Drehbewegungsgröße wird im Schritt 250 entschieden, welche der vorgegebenen Zeitkonstanten T_up oder T_down für die Tiefpass-Filterung im Schritt 230 verwendet wird. Hierzu erfolgt im Schritt 250 ein Vergleich der zweiten Drehbewegungsgröße mit der ersten Drehbewegungsgröße. Im Fall, dass die erste Drehbewegungsgröße M_in > M_out ist, d.h. falls die aktuelle Tretanforderung des Fahrers höher ist als die durch den Tiefpass gefilterte vorgesehene Grundlage für die Steuerung des Antriebs, wird die vorgegebene Zeitkonstante T_up gewählt, ansonsten die weitere vorgegebene Zeitkonstante T_down. Indem die Zeitkonstante T_up kleiner als die Zeitkonstante T_down gewählt wird, kann somit die Reaktion des Antriebes auf eine Änderung des Fahrerwunsches beschleunigt werden. Typischerweise ist dabei die Zeitkonstante T_up deutlich kleiner als die Zeitkonstante T_down, beispielsweise mindestens um eine Größenordnung. Optional kann auch vorgesehen sein, dass mehrere Zeitkonstanten zur Auswahl stehen, beispielsweise indem mehrere Schwellenwerte ausgehend von einem Vergleich der ersten und zweiten Drehbewegungsgröße verwendet werden.

Weiterhin kann vorgesehen sein, dass die Zeitkonstanten in Abhängigkeit von fahrdynamischen Größen oder Betriebsgrößen sowie Fahrerparameter aus einer Datenbank entnommen oder ausgewählt werden. Alternativ oder optional können die Zeitkonstanten auch kontinuierliche Werte zwischen zwei Extremwerten annehmen, die je nach weiteren Randbedingungen wie Fahrdynamikgrößen oder Betriebsgrößen ausgewählt, festgelegt oder bestimmt werden.

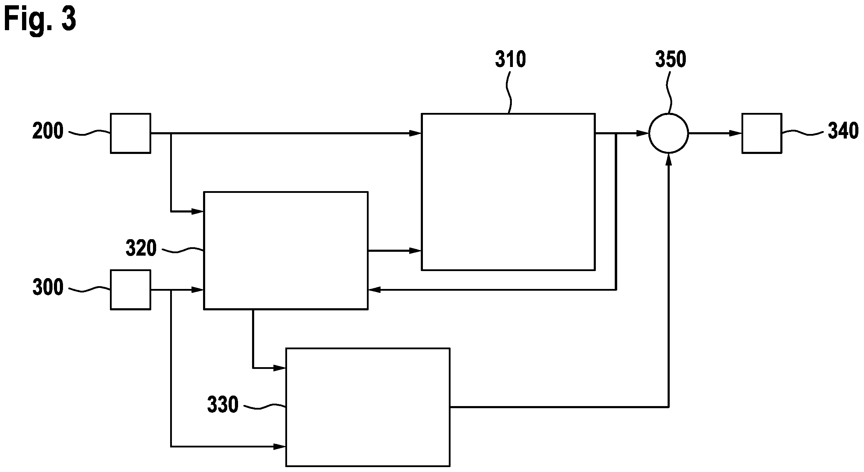

Im zweiten Ausführungsbeispiel der Figur 3 ist vorgesehen, eine zusätzliche Betätigungsgröße der Tretkurbel heranzuziehen, um die Ableitung der zweiten Drehbewegungsgröße zu verbessern und so dem Fahrer ein verbessertes Fahrergefühl zu vermitteln.

Hierzu wird ebenfalls wie in dem ersten Ausführungsbeispiel in einem ersten Schritt 200 das Fahrerdrehmoment M_in ermittelt und in einem Tiefpass-Filter 310 verarbeitet. Das Resultat des Tiefpass-Filters 310 wird einem Summierer 350 zur Verfügung gestellt, der die modifizierte zweite Drehbewegungsgröße M_out einem Ausgabemodul 340 zur Verfügung stellt. Wie bereits im ersten Ausführungsbeispiel ausgeführt, wird das Ergebnis des Tiefpass-Filters 310 einem Schritt 320 zum Vergleich der Drehbewegungsgrößen M_in und M_out zur Verfügung gestellt. Zusätzlich erfasst der Schritt 320 eine weitere Betätigungsgröße der Pedale, die in einem entsprechenden Schritt 300 erfasst wird. Im vorliegenden zweiten Ausführungsbeispiel kann als zweite Betätigungsgröße die Trittfrequenz oder Kadenz des Fahrers erfasst werden. Die Betätigungsgröße kann im Schritt 320 zusätzlich herangezogen werden, um die Zeitkonstante zu bestimmen, auszuwählen oder zu variieren beziehungsweise die entsprechende Zeitkonstante aus einer vorgegebenen Anzahl von wenigstens zwei Zeitkonstanten auszuwählen. Das Resultat des Vergleichs im Schritt 320 wird sowohl dem Tiefpass-Filter 310 entsprechend des ersten Ausführungsbeispiels als auch dem Schritt 330 zur Ermittlung eines Offset-Korrekturfaktors zur Verfügung stellt. Zur Ermittlung des Offset-Korrekturfaktors im Schritt 330 wird zusätzlich die Betätigungsgröße aus dem Schritt 300 sowie die ausgewählte, vorgegebene oder bestimmte Zeitkonstante T aus dem Schritt 320 herangezogen. Der so ermittelte Offset-Korrekturfaktor wird anschließend dem Summierer 350 zugeleitet, um die modifizierte Drehbewegungsgröße M_out zu erzeugen, die ihrerseits die Grundlage für die Ansteuerung des Antriebs liefert.

Durch die Bestimmung eines Offset-Korrekturfaktors können noch besser unterschiedliche Zeitkonstanten für die an- und absteigenden Eingangsdrehmomenten berücksichtigt werden. Durch die Verwendung einer weiteren Größe, die das Tretverhalten des Fahrers repräsentiert, kann somit der Unterschied zwischen den Zeitkonstanten für an- und absteigende Eingangsdrehmomente kompensiert werden.

Weiterhin kann die Ansteuerung durch einen derartigen Korrekturfaktor für niedrige Trittfrequenzen sensibler eingestellt werden während bei hohen Trittfrequenz das System träger reagiert.

In einem weiteren Ausführungsbeispiel kann vorgesehen sein, dass im Schritt 330 ein Skalierungsfaktor abgeleitet wird, der in einem Schritt 360 anstelle des Summierers auf die durch den Tiefpass-Filter 310 erzeugte zweite Drehbewegungsgröße angewendet wird. Dabei kann der Skalierfaktor ebenfalls zusätzlich zu den Zeitkonstanten von fahrdynamischen Größen, Betriebsgrößen oder Fahrerparametern abhängig bestimmt werden.

## Patentansprüche

1. Verfahren zur Ansteuerung eines Antriebs (160) eines pedalgetriebenen Fahrzeugs, insbesondere eines Elektrofahrrads, wobei das Verfahren
• mittels wenigstens eines ersten Sensors (120, 130) eine erste Drehbewegungsgröße erfasst, die die Drehbewegung der Pedale durch den Fahrer repräsentiert, und
• zur Steuerung des Antriebs (160) eine zweite Drehbewegungsgröße in Abhängigkeit der ersten Drehbewegungsgröße und einer Zeitkonstante erzeugt, wobei die Zeitkonstante eine Nachlaufzeit des Antriebs (160) bestimmt,
**dadurch gekennzeichnet, dass** das Verfahren
• die Zeitkonstante in Abhängigkeit eines Vergleichs der zweiten Drehbewegungsgröße und der ersten Drehbewegungsgröße variiert.

2. Verfahren nach Anspruch 1, **dadurch gekennzeichnet, dass** die zweite Drehbewegungsgröße mittels einer Tiefpass-Filterung (230, 310) der ersten Drehbewegungsgröße erzeugt wird.

3. Verfahren nach einem der vorhergehenden Ansprüche, **dadurch gekennzeichnet, dass** das Verfahren in Abhängigkeit des Vergleichs der zweiten Drehbewegungsgröße und der ersten Drehbewegungsgröße wenigstens zwischen einer ersten und einer zweiten Zeitkonstante (T_up, T_down) variiert, wobei insbesondere vorgesehen ist, dass die wenigstens erste und zweite Zeitkonstante (T_up, T_down) vorgegeben sind.

4. Verfahren nach einem der vorhergehenden Ansprüche, **dadurch gekennzeichnet, dass** das Verfahren eine erste Zeitkonstante (T_up) auswählt, wenn die erste Drehbewegungsgröße größer als ein Schwellenwert ist, der in Abhängigkeit von der zweiten Drehbewegungsgröße festgelegt wird und eine zweite Zeitkonstante (T_down) auswählt, wenn die erste Drehbewegungsgröße kleiner oder gleich dem Schwellenwert ist, wobei insbesondere vorgesehen ist, dass die erste Zeitkonstante kleiner als die zweite Zeitkonstante (T_down) ist.

5. Verfahren nach Anspruch 4, **dadurch gekennzeichnet, dass** der Schwellenwert der erzeugten zweiten Drehbewegungsgröße entspricht.

6. Verfahren nach Anspruch 4, **dadurch gekennzeichnet, dass** der Schwellenwert festgelegt wird durch
• eine Skalierung der zweiten Drehbewegungsgröße mit einem Skalierfaktor oder
• durch Addition eines absoluten oder variablen Werts zur zweiten Drehbewegungsgröße,
wobei der Skalierfaktor oder der absolute oder variable Wert in Abhängigkeit einer fahrdynamischen Sensorgröße oder einer Betriebsgröße des Fahrzeugs vorgegeben wird.

7. Verfahren nach einem der vorhergehenden Ansprüche, **dadurch gekennzeichnet, dass** das Verfahren zur Steuerung des Antriebs (160) die zweite Drehbewegungsgröße zusätzlich in Abhängigkeit einer die Betätigung der Pedale durch den Fahrer repräsentierenden Betätigungsgröße erzeugt.

8. Verfahren nach Anspruch 7, **dadurch gekennzeichnet, dass** die Zeitkonstante in Abhängigkeit der Betätigungsgröße variiert wird.

9. Verfahren nach Anspruch 7 oder 8, **dadurch gekennzeichnet, dass** das Verfahren zur Steuerung des Antriebs die zweite Drehbewegungsgröße mit einem Offset modifiziert wird, wobei der Offset in Abhängigkeit von der Betätigungsgröße und der Zeitkonstante (T_up, T_down) festgelegt wird.

10. Verfahren nach einem der vorhergehenden Ansprüche, **dadurch gekennzeichnet, dass** die erste Drehbewegungsgröße oder die Betätigungsgröße ein Drehmoment repräsentiert, welches der Fahrer auf die Pedale ausübt.

11. Verfahren nach einem der vorhergehenden Ansprüche 1 bis 10, **dadurch gekennzeichnet, dass** die erste Drehbewegungsgröße oder die Betätigungsgröße eine Trittfrequenz repräsentiert, welches durch den Fahrer beim Treten der Pedale erzeugt wird.

12. Vorrichtung zur Ansteuerung eines Antriebs (160) eines pedalgetriebenen Fahrzeugs, insbesondere eines Elektrofahrrads, wobei die Vorrichtung ein Steuergerät (100) aufweist, welches ein Verfahren nach einem der Ansprüche 1 bis 11 ausführt, wobei das Steuergerät (100)
• mittels wenigstens eines ersten Sensors (120, 130) eine erste Drehbewegungsgröße erfasst, die die Drehbewegung der Pedale durch den Fahrer repräsentiert, und
• zur Steuerung des Antriebs (160) eine zweite Drehbewegungsgröße in Abhängigkeit der ersten Drehbewegungsgröße und einer Zeitkonstante erzeugt, wobei die Zeitkonstante eine Nachlaufzeit des Antriebs (160) bestimmt,
**dadurch gekennzeichnet, dass** das Steuergerät (100)
• einen Vergleich der zweiten Drehbewegungsgröße und der ersten Drehbewegungsgröße durchführt und
• in Abhängigkeit des Vergleichs die Zeitkonstante variiert.

## Claims

1. Method for activating a drive (160) of a pedal-driven vehicle, in particular an electric bicycle, wherein the method
• detects a first rotational movement variable, which represents the rotational movement of the pedals by the cyclist, by means of at least one first sensor (120, 130), and,
• in order to control the drive (160), generates a second rotational movement variable depending on the first rotational movement variable and on a time constant, wherein the time constant determines a run-on time of the drive (160),
**characterized in that** the method
• varies the time constant depending on a comparison of the second rotational movement variable and the first rotational movement variable.

2. Method according to Claim 1, **characterized in that** the second rotational movement variable is generated by means of deep pass filtering (230, 310) of the first rotational movement variable.

3. Method according to either of the preceding claims, **characterized in that** the method varies at least between a first and a second time constant(T_up, T_down) depending on the comparison of the second rotational movement variable and the first rotational movement variable, wherein it is provided in particular that the at least first and second time constants (T_up, T_down) are predetermined.

4. Method according to one of the preceding claims, **characterized in that** the method selects a first time constant (T_up) if the first rotational movement variable is greater than a threshold value, which is defined depending on the second rotational movement variable, and selects a second time constant (T_down) if the first rotational movement variable is smaller than or equal to the threshold value, wherein it is provided in particular that the first time constant is smaller than the second time constant(T_down) .

5. Method according to Claim 4, **characterized in that** the threshold value corresponds to the second rotational movement variable generated.

6. Method according to Claim 4, **characterized in that** the threshold value is defined by
• scaling the second rotational movement variable with a scaling factor, or
• by addition of an absolute or variable value for the second rotational movement variable,
wherein the scaling factor or the absolute or variable value is predetermined depending on a driving-dynamics sensor variable or an operating variable of the vehicle.

7. Method according to one of the preceding claims, **characterized in that** the method for controlling the drive (160) generates the second rotational movement variable in addition depending on an actuating variable representing the actuation of the pedals by the cyclist.

8. Method according to Claim 7, **characterized in that** the time constant is varied depending on the actuating variable.

9. Method according to Claim 7 or 8, **characterized in that** the method for controlling the drive modifies the second rotational movement variable with an offset, the offset being defined depending on the actuating variable and the time constant(T_up, T_down).

10. Method according to one of the preceding claims, **characterized in that** the first rotational movement variable or the actuating variable represents a torque which the cyclist exerts on the pedals.

11. Method according to one of the preceding Claims 1 to 10, **characterized in that** the first rotational movement variable or the actuating variable represents a pedalling frequency which is produced by the cyclist when pedalling.

12. Device for activating a drive (160) of a pedal-driven vehicle, in particular an electric bicycle, wherein the device has a control unit (100) which carries out a method according to one of Claims 1 to 11, wherein the control unit (100)
• detects a first rotational movement variable, which represents the rotational movement of the pedals by the cyclist, by means of at least one first sensor (120, 130), and,
• in order to control the drive (160), generates a second rotational movement variable depending on the first rotational movement variable and on a time constant, wherein the time constant determines a run-on time of the drive (160),
**characterized in that** the control unit (100)
• carries out a comparison of the second rotational movement variable and the first rotational movement variable and
• varies the time constant depending on the comparison.

## Revendications

1. Procédé de commande d'un entraînement (160) d'un véhicule à pédalage, en particulier d'une bicyclette électrique, le procédé comprenant
• la détection, au moyen d'au moins un premier capteur (120, 130), une première grandeur de mouvement de rotation qui représente le mouvement de rotation des pédales par le cycliste, et
• pour la commande de l'entraînement (160), la génération d'une deuxième grandeur de mouvement de rotation en fonction de la première grandeur de mouvement de rotation et d'une constante de temps, la constante de temps déterminant un temps d'arrêt de l'entraînement (160),
**caractérisé en ce que**, dans le procédé,
• la constante de temps varie en fonction d'une comparaison de la deuxième grandeur de mouvement de rotation et de la première grandeur de mouvement de rotation.

2. Procédé selon la revendication 1, **caractérisé en ce que** la deuxième grandeur de mouvement de rotation est générée au moyen d'un filtrage passe-bas (230, 310) de la première grandeur de mouvement de rotation.

3. Procédé selon l'une des revendications précédentes, **caractérisé en ce que** le procédé varie au moins entre une première et une deuxième constante de temps (T_up, T_down) en fonction de la comparaison de la deuxième grandeur de mouvement de rotation et de la première grandeur de mouvement de rotation, étant notamment prévu que les au moins première et deuxième constantes de temps (T_up, T_down) sont prédéfinies.

4. Procédé selon l'une des revendications précédentes, **caractérisé en ce que** le procédé sélectionne une première constante de temps (T_up) lorsque la première quantité de mouvement de rotation est supérieure à une valeur seuil fixée en fonction de la deuxième quantité de mouvement de rotation et sélectionne une deuxième constante de temps (T_down) lorsque la première quantité de mouvement de rotation est inférieure ou égale à la valeur seuil, étant notamment prévu que la première constante de temps est inférieure à la deuxième constante de temps (T_down).

5. Procédé selon la revendication 4, **caractérisé en ce que** la valeur seuil correspond à la deuxième grandeur de mouvement de rotation générée.

6. Procédé selon la revendication 4, **caractérisé en ce que** la valeur seuil est déterminée par
• une mise à l'échelle de la deuxième grandeur de mouvement rotatif par un facteur d'échelle ou
• par l'addition d'une valeur absolue ou variable à la deuxième grandeur de mouvement de rotation,
le facteur d'échelle ou la valeur absolue ou variable étant prédéfini(e) en fonction d'une grandeur de capteur dynamique de conduite ou d'une grandeur de fonctionnement du véhicule.

7. Procédé selon l'une des revendications précédentes, **caractérisé en ce que** le procédé de commande de l'entraînement (160) génère en outre la deuxième grandeur de mouvement de rotation en fonction d'une grandeur d'actionnement représentative de l'actionnement des pédales par le conducteur.

8. Procédé selon la revendication 7, **caractérisé en ce que** la constante de temps varie en fonction de la grandeur d'actionnement.

9. Procédé selon la revendication 7 ou 8, **caractérisé en ce que** le procédé de commande de l'entraînement modifie la deuxième grandeur de mouvement de rotation avec un décalage, le décalage étant déterminé en fonction de la grandeur d'actionnement et de la constante de temps (T_up, T_down).

10. Procédé selon l'une quelconque des revendications précédentes, **caractérisé en ce que** la première grandeur de mouvement de rotation ou la grandeur d'actionnement représente un couple exercé par le conducteur sur les pédales.

11. Procédé selon l'une quelconque des revendications précédentes 1 à 10, **caractérisé en ce que** la première grandeur de mouvement de rotation ou la grandeur d'actionnement représente une cadence de pédalage générée par le cycliste lorsqu'il appuie sur les pédales.

12. Dispositif de commande d'un entraînement (160) d'un véhicule à pédalage, notamment d'un vélo électrique, le dispositif comportant une unité de commande (100) mettant en œuvre un procédé selon l'une des revendications 1 à 11, l'unité de commande (100)
• détectant, au moyen d'au moins un premier capteur (120, 130), une première grandeur de mouvement de rotation qui représente le mouvement de rotation des pédales par le cycliste, et
• générant pour la commande de l'entraînement (160), une deuxième grandeur de mouvement de rotation en fonction de la première grandeur de mouvement de rotation et d'une constante de temps, la constante de temps déterminant un temps d'arrêt de l'entraînement (160),
**caractérisé en ce que** l'unité de commande (100)
• effectue une comparaison de la deuxième grandeur de mouvement de rotation et de la première grandeur de mouvement de rotation et
• fait varier la constante de temps en fonction de la comparaison.
